(19) Europäisches Patentamt
European Patent Office
Office européen des brevets

(11) **EP 3 559 644 B1**

(12) **FASCICULE DE BREVET EUROPEEN**

(45) Date de publication et mention
de la délivrance du brevet:
**02.03.2022 Bulletin 2022/09**

(21) Numéro de dépôt: **17832281.4**

(22) Date de dépôt: **21.12.2017**

(51) Classification Internationale des Brevets (IPC):
**G01N 25/00** *(2006.01)*       **G01J 3/10** *(2006.01)*
**G02B 21/00** *(2006.01)*

(52) Classification Coopérative des Brevets (CPC):
**G01J 5/0003; G01J 5/026; G01J 5/0805;**
**G01J 5/0806; G01J 5/0896;** G01J 2005/0077;
G02B 21/0004

(86) Numéro de dépôt international:
**PCT/FR2017/053799**

(87) Numéro de publication internationale:
**WO 2018/115778 (28.06.2018 Gazette 2018/26)**

(54) **DISPOSITIF DE DETECTION INFRAROUGE**

INFRAROTDETEKTIONSVORRICHTUNG

INFRARED DETECTION DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.12.2016 FR 1663273**

(43) Date de publication de la demande:
**30.10.2019 Bulletin 2019/44**

(73) Titulaire: **Centre National de la Recherche
Scientifique**
**75016 Paris (FR)**

(72) Inventeurs:
• **DE WILDE, Yannick**
**75013 Paris (FR)**
• **PERROS, Elodie**
**92140 Clamart (FR)**
• **KRACHMALNICOFF, Valentina**
**75013 Paris (FR)**
• **CARMINATI, Rémi**
**78600 Maisons-Laffitte (FR)**
• **BOCCARA, Albert-Claude**
**75006 Paris (FR)**

(74) Mandataire: **Marks & Clerk France
Immeuble "Visium"
22, avenue Aristide Briand
94117 Arcueil Cedex (FR)**

(56) Documents cités:
**US-A1- 2013 134 310**

• **SELIM ELHADJ ET AL: "Combined Infrared
Thermal Imaging and Laser Heating for the Study
of Materials Thermophysical and Processing
Properties at High Temperatures", CRITICAL
REVIEWS IN SOLID STATE AND MATERIALS
SCIENCES, vol. 39, no. 3, 28 mars 2014
(2014-03-28), pages 175-196, XP055419384, US
ISSN: 1040-8436, DOI:
10.1080/10408436.2013.789962**

**EP 3 559 644 B1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### DOMAINE DE L'INVENTION

La présente invention concerne le domaine de la détection super-résolue dans l'infrarouge, que ce soit pour l'imagerie (microscopie), la thermographie ou pour la spectroscopie d'un échantillon.

Par concision, on entend par « infrarouge » au sens de la présente invention, tout champ électromagnétique dont la fréquence, ou indistinctement la longueur d'onde, est comprise dans la bande infrarouge (y compris proche et lointain), la bande térahertz, et la bande micro-onde.

Le spectre infrarouge est très riche d'informations (vibrations moléculaires, phonons, plasmons dans les semi-conducteurs, émission thermique, etc.). Il permet donc de caractériser un échantillon.

La spectroscopie infrarouge porte sur l'étude du spectre d'un rayonnement infrarouge réfléchi, transmis, ou absorbé par un échantillon, ou produit par le rayonnement thermique de la surface de celui-ci tel que décrit dans le livre Peter R. Griffiths and James A. De Haseth, Fourier Transform Infrared Spectrometry (John Wiley and Sons, Hoboken, New Jersey, 2007), 2nd ed. Comme également décrit dans cet ouvrage, les mesures de microspectroscopie qui visent à cartographier le spectre à la surface de l'échantillon font intervenir un microscope infrarouge couplé avec un spectromètre infrarouge : l'échantillon peut être placé sur un dispositif de translation selon 2 axes orthogonaux, contrôlé par ordinateur, et son spectre mesuré à chaque pas de balayage, ou alternativement il peut être statique, et son spectre mesuré à l'aide d'un détecteur multicanal matriciel.

Dans ce domaine, il est connu de l'homme du métier les instruments classiques tels que les microscopes infrarouge et les spectromètres infrarouge, qui ont une résolution spatiale d'environ 10 micromètres, à cause de la limite de diffraction directement liée à la longueur d'onde d'observation, ce qui constitue un verrou important pour ces instruments.

La super-résolution, qu'il s'agisse de microscopie, de spectroscopie, ou de microspectroscopie, consiste .à s'affranchir de la limite de diffraction pour obtenir des informations avec une résolution spatiale meilleure que la longueur d'onde.

Jusqu'à présent, pour s'affranchir de la limite de résolution dans l'infrarouge, il faut utiliser un microscope optique de champ proche (ou SNOM pour *Scanning Near-field Optical Microscope* en anglais) qui met en oeuvre une sonde locale à balayage de type pointe de microscope à force atomique (AFM pour *Atomic Force Microscope* en anglais) en plaçant la sonde en contact avec la surface de l'échantillon. Cela permet de réaliser des mesures dans l'infrarouge avec une résolution qui est proche de celle de la topographie mesurée par AFM. Par exemple, la publication F Huth, M Schnell, J Wittborn, N Ocelic, & R Hillenbrand, "Infrared-spectroscopic nanoimaging with a thermal source", NATURE MATERIALS Vol. 10, 352 (2011) présente une telle réalisation utilisant le rayonnement d'une source thermique externe qui est diffusée par la pointe d'un AFM en contact avec la surface de l'échantillon. La publication AC Jones, MB Raschke, "Thermal Infrared Near-Field Spectroscopy", NANO LETTERS, Vol. 12, 1475 - 1481 (2012), présente un montage qui utilise une pointe d'AFM chauffante qui augmente localement le rayonnement thermique de l'échantillon, et diffuse celui-ci vers un dispositif de microspectroscopie infrarouge.

De tels microscopes sont efficaces mais sont chers et nécessitent de placer une sonde locale à balayage en contact avec la surface de l'échantillon étudié, afin de pouvoir diffuser le champ électromagnétique excité à l'aide d'une source extérieure.

Une méthode alternative au SNOM, dite IR-AFM, consiste à utiliser un effet thermomécanique sur une pointe AFM. Dans ce cas, un rayonnement infrarouge est absorbé par l'échantillon et la dilatation thermique qui s'ensuit est mesurée par l'amplitude d'oscillation d'une pointe AFM en porte à faux placée en contact avec la surface de l'échantillon. Il s'agit là encore d'une technique qui exige un contact avec l'échantillon, qui nécessite l'emploi d'une source infrarouge modulée, et qui est également très chère.

Les méthodes SNOM et IR-AFM, par exemple décrites dans les documents US4947034, US20050259252, US7977636 ou WO2008143817, ou encore dans la publication A Dazzi, CB Prater, Q Hu, DB Chase, et al., "AFM-IR: Combining Atomic Force Microscopy and Infrared Spectroscopy for Nanoscale Chemical Characterization", APPLIED SPECTROSCOPY Vol. 66, 1365-1384 (2012), sont très coûteuses car elles nécessitent un AFM et une source extérieure dont le spectre est large dans l'infrarouge.

En outre, ce sont des méthodes de contact, difficiles à mettre en oeuvre, et limitées à des investigations de surface de l'échantillon.

On connait également la méthode dite ATR pour *Attenuated Total Reflectance* an anglais, par exemple telle que décrite dans les documents US8873140 et US5093580. En microscopie infrarouge, il est possible d'augmenter la résolution d'un microscope en plaçant l'échantillon en contact avec une cellule ATR. Hormis l'inconvénient de nécessiter un contact avec l'échantillon comme pour les méthodes SNOM et IR-AFM, le gain en résolution est limité par la valeur de l'indice optique n de la cellule ATR qui est généralement en Germanium (n=4) ou en Silicium (n=3,4).

La présente invention vise à s'affranchir de ces contraintes.

### RESUME DE L'INVENTION

Dans ce contexte, et plus précisément, l'invention concerne selon un premier de ces objets, un dispositif de détection infrarouge, comprenant :

- un détecteur infrarouge (50) configuré pour émettre un signal (S1) représentatif du rayonnement thermique de longueur d'onde (L_F2) émis par un ensemble d'au moins un point chaud (21),
- une source lumineuse (10) configurée pour émettre un faisceau incident (F1) de longueur d'onde (L_F1) inférieure à la longueur d'onde (L_F2), de préférence dans une fenêtre de longueur d'onde visible ou UV,
- un dispositif de focalisation (11) dudit faisceau incident (F1), la focalisation dudit faisceau incident (F1) produisant un ensemble d'au moins une tache de focalisation, chaque tache de focalisation ayant une taille inférieure à celle de la longueur d'onde (L_F2) du rayonnement thermique infrarouge détecté, chaque tache de focalisation étant susceptible de générer un point chaud (21) respectif lorsque ladite tache de focalisation est située sur un support ou un échantillon, et dont la vitesse d'étalement sur ledit support ou ledit échantillon est connue,
- un module de traitement (60), connecté au moins au détecteur infrarouge (50),
- un dispositif de synchronisation (70) connecté à l'un au moins parmi ladite source lumineuse (10), ledit détecteur infrarouge (50) et ledit module de traitement (60),
- le dispositif de synchronisation (70) étant configuré pour émettre un signal de synchronisation (SYNC),
- le détecteur infrarouge (50) ou le module de traitement (60) étant configuré pour mesurer le signal (S1) sur une fenêtre de temps (FT) prédéterminée en fonction dudit signal de synchronisation (SYNC) et de la vitesse d'étalement du point chaud.

Il est essentiellement caractérisé en ce que le module de traitement (60) est configuré pour mesurer le signal (S1) sur une fenêtre de temps (FT) dont la valeur de celle-ci multipliée par la valeur de la vitesse d'étalement du point chaud (21) est inférieure à la valeur de la longueur d'onde infrarouge (L_F2) du rayonnement thermique émis par ledit point chaud (21).

Le signal (S1) peut être un signal électrique ou un signal optique.

La connexion entre le dispositif de synchronisation (70), la source lumineuse (10), le détecteur infrarouge (50) et le module de traitement (60) peut être électrique et/ou optique, par exemple avec une photodiode rapide.

Dans un mode de réalisation, le module de traitement (60) est configuré pour mesurer le signal (S1) sur une fenêtre de temps (FT) dont la valeur de celle-ci multipliée par la valeur de la vitesse d'étalement du point chaud (21) est inférieure à la valeur de la longueur d'onde infrarouge (L_F2) du rayonnement thermique émis par ledit point chaud (21).

Grâce à cette caractéristique, la taille du ou des point(s) chaud(s) ainsi produit(s) est inférieure à la longueur d'onde infrarouge (L_F2) du rayonnement thermique.

De préférence, la longueur d'onde (L_F2) du rayonnement thermique émis par un ensemble d'au moins un point chaud (21) est comprise dans le moyen infrarouge (3 micromètres à 50 micromètres) et le lointain infrarouge (50 micromètres à 1000 micromètres).

Des essais ont été réalisés avec un détecteur de plage spectrale comprise entre 7 et 12 micromètres.

Dans un mode de réalisation,

- la source lumineuse (10) est une source impulsionnelle, configurée pour émettre un train d'au moins une impulsion lorsqu'elle est activée, et
- le signal de synchronisation (SYNC) est émis en fonction dudit train d'au moins une impulsion.

De préférence, le module de traitement est configuré pour prélever le signal (S1) qui correspond au rayonnement thermique arrivant sur le détecteur infrarouge (50) directement après le train d'au moins une impulsion, pendant une durée telle que l'étalement du point chaud est inférieur à la longueur d'onde infrarouge du rayonnement thermique détecté.

Dans un mode de réalisation,

- la source lumineuse (10) est une source lumineuse continue ou impulsionnelle, modulée temporellement à une fréquence de modulation (Fmod),
- le dispositif de détection infrarouge comprenant en outre un démodulateur configuré pour démoduler le signal (S1) issu du détecteur infrarouge (50) à la fréquence de modulation (Fmod) ou une harmonique de cette fréquence.

Dans un mode de réalisation, le détecteur infrarouge (50) comprend l'un au moins parmi :

- un détecteur infrarouge monocanal ou un imageur infrarouge (51), et
- un spectromètre infrarouge (52).

Par « imageur infrarouge », on entend un détecteur infrarouge multicanaux formé typiquement d'une matrice de détecteurs infrarouge. Avec un détecteur multicanaux, on peut effectuer une super-localisation du point chaud, c'est-à-dire que le point chaud produit une tache d'Airy limitée par la diffraction qui peut être échantillonnée sur plusieurs pixels de l'imageur infrarouge. Le centre de la tache peut ainsi être déterminé avec une précision meilleure que la longueur d'onde infrarouge par l'ajustement d'une fonction gaussienne en deux dimensions sur le profil de cette tâche, tel que connu en microscopie par localisation photoactivée ou microscopie PALM (pour photo-activated localization microscopy en anglais).

On peut prévoir en outre un objectif optique (40) configuré pour collecter le rayonnement thermique (F2) d'un point chaud (21) vers ledit détecteur infrarouge (50).

On peut prévoir que le module de traitement (60) est configuré pour mesurer le signal (S1) sur une fenêtre de temps (FT) dont la valeur de celle-ci multipliée par la valeur de la vitesse d'étalement du point chaud (21) est inférieure à la valeur de la longueur d'onde infrarouge (L_F2) du rayonnement thermique émis par ledit point chaud (21).

On peut prévoir en outre un support (30) d'échantillon, le dispositif pouvant adopter l'une ou l'autre des configurations parmi :

- une configuration en réflexion dans laquelle la source lumineuse (10) et le détecteur infrarouge (50) sont disposés du même côté du support (30), et
- une configuration en transmission dans laquelle la source lumineuse (10) et le détecteur infrarouge (50) sont disposés de part et d'autre du support (30).

On peut prévoir en outre :

- un dispositif de balayage, configuré pour modifier la position relative du point de focalisation du faisceau (F1) et du support (30) d'échantillon.

On peut prévoir en outre un échantillon (20), ledit échantillon étant optionnellement compris dans un canal microfluidique (23) d'une cellule microfluidique, ladite cellule microfluidique comprenant une couche (22) externe, transparente à la longueur d'onde d'excitation (L_F1) du faisceau incident (F1), et une couche interne (24) transparente à la longueur d'onde (L_F2) du rayonnement thermique (F2).

Selon un autre de ses objets, l'invention concerne un procédé de détection infrarouge susceptible de mettre en oeuvre le dispositif selon l'invention, le procédé comprenant des étapes consistant à :

- positionner un échantillon (20) sur un support (30),
- activer une source lumineuse (10),
- focaliser le faisceau (F1) d'une source lumineuse (10) sur un ensemble d'au moins une zone de focalisation (21) dont la position est prédéterminée et comprise dans ledit échantillon (20), sur une surface dudit échantillon, ou à l'interface entre ledit échantillon (20) et ledit support (30), pour générer une augmentation locale du rayonnement thermique (F2) émis par ledit échantillon (20) ou ledit support (30),
- collecter ledit rayonnement thermique (F2) émis par chaque zone de focalisation (21) dudit ensemble dans un objectif optique (40) combiné à un détecteur infrarouge (50) comprenant l'un au moins parmi :

  - un détecteur infrarouge monocanal ou un imageur infrarouge (51), et
  - un spectromètre infrarouge (52),

- générer un signal de sortie (S1), représentatif du rayonnement thermique (F2) détecté par ledit détecteur infrarouge (50),
- synchroniser ledit détecteur infrarouge (50) et ladite source lumineuse (10), et
- mesurer le signal de sortie (S1) sur une fenêtre de temps (FT) prédéterminée à partir d'un moment prédéterminé après l'activation de la source lumineuse (10).

On peut prévoir que le procédé comprend en outre, des étapes consistant à :

- moduler temporellement ladite source lumineuse (10), continue ou impulsionnelle, à une fréquence de modulation (Fmod), et
- démoduler le signal (S1) issu du détecteur infrarouge (50) à la fréquence de modulation (Fmod) ou à une de ses harmoniques par un démodulateur du dispositif de détection infrarouge,
  et dans lequel de préférence,
- - si la source lumineuse (10) est une source impulsionnelle, elle est configurée pour générer un train d'impulsions comprenant un ensemble de fronts montants et fronts descendants, l'étape d'activation du détecteur infrarouge (50) consistant alors à activer le détecteur infrarouge (50) au plus tard au dernier front descendant du train d'impulsions

On peut aussi prévoir d'appliquer une démodulation du signal (S1) avec une détection synchrone à la place d'un fenêtrage temporel si la source lumineuse (10) est une source lumineuse impulsionnelle.

On peut prévoir que l'étape consistant à mesurer le signal de sortie (S1) sur une fenêtre de temps (FT) prédéterminée comprend l'une des opérations parmi :

- activer le détecteur infrarouge (50) sur une fenêtre de temps (FT) prédéterminée, à partir d'un moment prédéterminé après l'activation de la source lumineuse (10), et
- maintenir le détecteur infrarouge (50) actif et ne prélever que la partie du signal de sortie (S1) produite sur une fenêtre de temps (FT) prédéterminée, à partir d'un moment prédéterminé après l'activation de la source lumineuse (10).

On peut prévoir que si la source lumineuse (10) est une source impulsionnelle configurée pour générer un train d'impulsions comprenant un ensemble de fronts montants et fronts descendants, alors l'étape d'activation du détecteur infrarouge (50) consiste à activer le détecteur infrarouge (50) au plus tard au dernier front descendant du train d'impulsions.

Dans le cas où le détecteur est constamment actif, l'étape de prélèvement du signal de sortie (S1) pendant une fenêtre de temps (FT) prédéterminée démarre au plus tard au dernier front descendant du train d'impulsions.

Grâce à la présente invention, on peut utiliser une source lumineuse de courte longueur d'onde (L_F1), impulsionnelle ou modulée, pour produire un point chaud dont le rayonnement thermique infrarouge, très localisé sur une zone de taille inférieure à la longueur d'onde (L_F2) qu'il émet, est mesuré. C'est donc une solution sans contact qui diffère sur ce point des solutions de l'art antérieur.

En outre, la présente invention permet non seulement de sonder les propriétés infrarouges de la surface de l'échantillon, mais aussi de sonder sous la surface de l'échantillon, ce que les sondes SNOM ne permettent pas.

La présente invention peut exploiter le rayonnement thermique infrarouge émis à partir du point chaud de taille inférieure à (L_F2) créé sur l'échantillon. L'échantillon est donc sa propre source de rayonnement infrarouge, la présente invention ne nécessite pas de source infrarouge externe. De même, la présente invention peut exploiter le rayonnement thermique infrarouge émis à partir du point chaud créé sous l'échantillon. Dans ce cas, le support est la propre source de rayonnement infrarouge, la présente invention ne nécessite pas non plus de source infrarouge externe.

En outre, le rayonnement infrarouge généré par l'échantillon présente un spectre large et contient intrinsèquement toutes les fréquences optiques intéressantes pour caractériser l'échantillon, ce qui est très avantageux par rapport aux sondes SNOM qui nécessitent de disposer d'une source infrarouge extérieure dont le spectre présente un recouvrement avec les fréquences optiques d'intérêt de l'échantillon.

La présente invention permet une imagerie super-résolue c'est-à-dire que la résolution spatiale est inférieure à la longueur d'onde du rayonnement thermique mesuré (L_F2). En l'espèce, en ajustant la fenêtre temporelle, la résolution peut être égale à la taille de la tache de focalisation.

Par ailleurs, la présente invention généralise le concept de microscopie super-résolue aux plus grandes longueurs d'onde (infrarouge moyen, térahertz), et fonctionne sans marqueur car le signal détecté provient du rayonnement thermique infrarouge de l'échantillon lui-même, ce qui distingue la présente invention des technologies de microscopie de fluorescence super-résolue, qui sont en outre restreintes au domaine spectral du visible et du proche infrarouge.

La présente invention est très bon marché et permet de sonder sous la surface d'un échantillon puisque c'est une technique sans contact.

D'autres caractéristiques et avantages de la présente invention apparaîtront plus clairement à la lecture de la description suivante donnée à titre d'exemple illustratif et non limitatif et faite en référence aux figures annexées.

## DESCRIPTIF DES DESSINS

la figure 1 illustre un mode de réalisation d'un dispositif selon l'invention,
la figure 2 illustre une configuration en réflexion d'un dispositif selon l'invention,
la figure 3 illustre une configuration en transmission d'un dispositif selon l'invention,
la figure 4 illustre une configuration en réflexion d'un dispositif selon l'invention,
la figure 5 illustre une configuration en transmission d'un dispositif selon l'invention,
la figure 6 illustre une image de microscopie infrarouge conventionnelle comprenant en insert une image infrarouge super-résolue d'une fibre de verre, en l'espèce de 13 microns d'épaisseur, obtenue selon l'invention,
la figure 7 illustre une courbe de déclin de l'intensité du signal infrarouge F2 en fonction du temps,
la figure 8A illustre le spectre infrarouge obtenu sur un échantillon de verre grâce à un spectromètre selon l'invention, et
la figure 8B illustre le spectre infrarouge obtenu sur un échantillon de PDMS grâce à un spectromètre selon l'invention.

## DESCRIPTION DETAILLEE

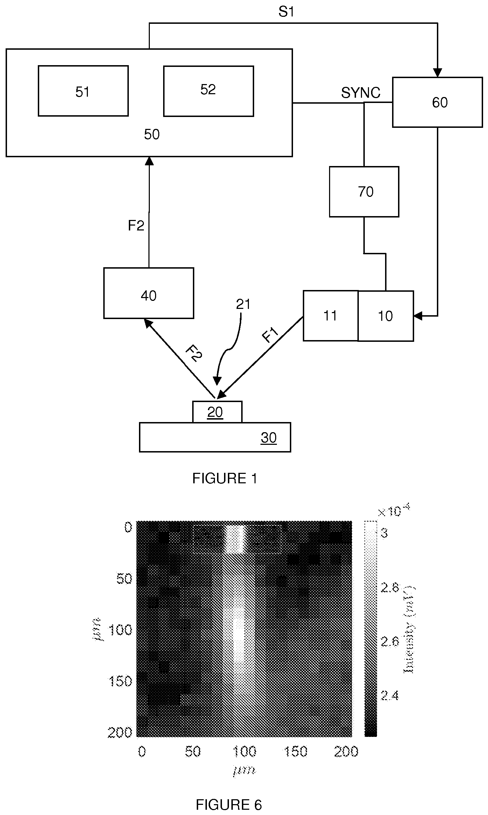

La figure 1 illustre un mode de réalisation du dispositif selon l'invention.

Le dispositif comprend une source lumineuse 10, configurée pour générer un faisceau excitateur de lumière incident F1, également appelé signal F1.

La source lumineuse 10 est une source lumineuse impulsionnelle ou modulée temporellement. Par exemple, le faisceau de lumière incident F1 est un faisceau laser et la source lumineuse 10 est un laser émettant dans le spectre visible. Par concision, on entend par « impulsion », une impulsion unique ou un train d'impulsions.

Le faisceau de lumière F1 est de préférence de courte longueur d'onde. Typiquement la longueur d'onde est comprise dans la fenêtre visible ou dans la fenêtre UV. Typiquement, on prévoit que la longueur d'onde L_F1 du faisceau F1 est très inférieure à la longueur d'onde L_F2 du rayonnement thermique F2 d'un échantillon, comme décrit ci-après. Par « très inférieure » on entend que le ratio entre la longueur d'onde L_F1 du faisceau F1 et la longueur d'onde L_F2 du rayonnement thermique est inférieur à une valeur seuil prédéterminée. Typiquement la valeur seuil est supérieure ou égale à 10.

Au sens de la présente invention, par concision, on entend par « la » longueur d'onde L_F2, la longueur d'onde moyenne du spectre du rayonnement thermique émis par un point chaud 21.

De préférence, L_F2 est au-delà de l'infrarouge moyen, c'est-à-dire supérieure à 2.5 μm.

L'échantillon 20 est par exemple posé sur un support 30, typiquement un support 30 d'un microscope non illustré.

L'échantillon 20 est disposé dans un environnement à une température de préférence sensiblement constante, typiquement la température ambiante. Hors activation de la source lumineuse 10, la chaleur interne de l'échantillon 20 génère dans ce cas un rayonnement thermique F2, également appelé signal F2, dont l'intensité est sensiblement constante.

Lorsque la source lumineuse 10 est active, le faisceau incident F1 est focalisé sur une zone de focalisation de l'échantillon 20, à la surface externe ou interne de celui-ci, ou à l'intérieur de celui-ci, par exemple par un dispositif de focalisation optique du faisceau incident 11, tel qu'un objectif optique, éventuellement intégré à la source lumineuse 10.

Il est possible de focaliser le faisceau F1 sur une zone de focalisation dont le diamètre équivalent est inférieur à la longueur d'onde L_F2 du rayonnement thermique F2, également appelé faisceau F2 ou signal F2. En l'espèce, le diamètre équivalent de la zone de focalisation est d'environ 1 micron, et la longueur d'onde L_F2 est environ 10 microns.

La focalisation du faisceau incident F1 sur l'échantillon génère par absorption une élévation locale de la température de celui-ci.

A intensité du faisceau F1 équivalente, plus la zone de focalisation est petite, plus l'élévation locale de température est importante.

Sous l'effet du faisceau F1, la température locale de la zone de focalisation augmente et devient supérieure à celle du reste de l'échantillon, sous réserve que ledit échantillon soit absorbant à la longueur d'onde du faisceau incident F1, et définit ainsi un point chaud 21.

Le point chaud 21 peut être unique. Le point de focalisation unique correspondant est typiquement réalisé en faisant passer un laser excitateur étendu au travers d'une lentille.

On peut aussi créer un ensemble de points chauds simultanément et effectuer la détection du rayonnement thermique en parallèle, par exemple grâce à un détecteur multicanaux, ce qui permet paralléliser la mesure du signal F2 et de gagner du temps d'analyse.

Un multiplexage avec plusieurs points chauds peut être réalisé en faisant passer un laser excitateur étendu au travers de plusieurs microlentilles. Ce principe est utilisé en microscopie confocale de fluorescence avec la méthode dite SDCLM pour *Spinning disk confocal laser microscopy* en anglais et décrite par exemple à l'adresse http://www.andor.com/learning-academy/spinning-disk-confocal-a-technical-overview. Dans ce cas, au lieu d'utiliser un seul spot laser qui balaye la surface de l'échantillon, plusieurs spots effectuent le balayage simultanément grâce à l'emploi d'un disque rotatif dotés de microlentilles, où le laser illumine simultanément un ensemble de microlentilles.

L'élévation locale de température de l'échantillon autour dudit point chaud 21 produit alors une augmentation du rayonnement thermique F2 dans l'infrarouge de l'échantillon, localisée autour dudit point chaud, et dont l'intensité correspond à l'élévation locale du rayonnement thermique de l'échantillon.

La position du point chaud 21 est connue et son extension spatiale correspond au minimum à la zone de focalisation du faisceau incident F1.

Au cours du temps, après une impulsion du faisceau incident F1, la chaleur diffuse dans l'échantillon 20 autour du point chaud 21 et tend alors à s'étendre.

Un objectif optique 40, connu en soi, collecte le rayonnement thermique F2 du point chaud 21 et dirige ensuite ledit faisceau F2 vers au moins un détecteur infrarouge 50, en l'espèce l'un au moins parmi :

- un détecteur infrarouge monocanal ou un imageur infrarouge 51, et
- un spectromètre infrarouge 52.

Le détecteur infrarouge 50 génère ensuite un signal de sortie S1, représentatif du rayonnement thermique F2, qui est envoyé à un module de traitement 60.

Le module de traitement 60 est synchronisé avec la source lumineuse 10, en l'espèce grâce à des impulsions électriques envoyées par la source lumineuse 10 vers le module de traitement 60 à chaque impulsion du faisceau incident F1.

Toutefois, et d'autant plus si la source lumineuse 10 est une source continue, il risque de se produire un phénomène de diffusion thermique dans ou sur l'échantillon 20. De fait, à cause de la constante de diffusion thermique inhérente à tout échantillon, la tache de chaleur générée par la focalisation de la source lumineuse 10 tend à s'agrandir avec le temps.

**Fenêtrage temporel**

Pour éviter ou au moins limiter ce phénomène, on prévoit un fenêtrage temporel, ou sélection temporelle, également connue sous l'anglicisme *boxcar,* qui consiste à activer le détecteur infrarouge 50 ou à sélectionner le signal (S1) qu'il produit sur une fenêtre de temps FT prédéterminée, à partir d'un moment prédéterminé après l'activation de la source lumineuse 10.

La durée de mesure du rayonnement thermique F2, qui correspond à la durée d'activation du détecteur infrarouge 50 ou à la durée de sélection du signal S1 qu'il produit, également appelée « largeur de fenêtre », permet de modifier la résolution spatiale optique.

A cause de la diffusion thermique dans l'échantillon, plus la largeur de fenêtre est grande et moins la résolution spatiale est bonne, ce qui diminue la possibilité d'observation de petits détails de l'échantillon. De même, plus la fenêtre de temps FT est initialisée longtemps après l'activation de la source lumineuse 10, moins la résolution spatiale est bonne. Pour optimiser les résultats, on a donc intérêt à initialiser ou activer la fenêtre de temps FT au plus tôt après l'activation de la source lumineuse, et à limiter la largeur de fenêtre, chacune de ces actions permettant de limiter l'effet de la diffusion thermique.

De préférence, la fenêtre de temps FT est initialisée au plus tard à la fin de l'activation de la source lumineuse 10, en l'espèce avec une source lumineuse 10 impulsionnelle, au plus tard au dernier front descendant du train d'impulsions.

De préférence, la largeur de fenêtre est asservie à la constante de diffusion thermique de l'échantillon. En particulier, la largeur de fenêtre est de préférence inversement proportionnelle à la constante de diffusion thermique de l'échantillon.

En l'espèce, on prévoit un dispositif de synchronisation 70 de la source lumineuse 10 et du détecteur infrarouge 50 ou du module de traitement 60. Le dispositif de synchronisation 70 peut être intégré au module de traitement 60.

**Dans un mode de réalisation,** la source lumineuse 10 est une source impulsionnelle qui génère une impulsion de chauffage, très localisée dans l'espace (point chaud 21) et dans le temps (impulsion).

Par exemple la source lumineuse 10 est une source laser UV qui génère des impulsions de 1 nanoseconde chacune, à une cadence maximale de 1 kHz.

De préférence, le rayonnement thermique du point chaud F2 est collecté à brève échéance après l'impulsion de chauffage de la source lumineuse 10. Par « brève échéance », on entend au plus tard à une durée prédéterminée après l'impulsion de chauffage, c'est-à-dire l'activation de la source lumineuse.

Ainsi, le phénomène de diffusion thermique est extrêmement limité et la zone de l'échantillon émettant effectivement le rayonnement thermique correspond sensiblement au point chaud 21.

Par exemple, le détecteur infrarouge 50 est activé dans une fenêtre de détection FT dont la durée est prédéterminée et dont la position temporelle est asservie à la fin d'une impulsion de chauffage. Typiquement la fenêtre de détection FT est activée au plus tard après le dernier front descendant d'un train d'impulsions de chauffage, et la largeur de fenêtre dépend de la nature de l'échantillon.

**Dans un mode de réalisation,** la source lumineuse 10 est une source continue, dont l'intensité est modulée temporellement à une fréquence de modulation Fmod, de préférence haute fréquence, par exemple selon une fonction sinusoïdale. De préférence, la fréquence de modulation Fmod est supérieure ou égale à une fréquence f pour laquelle la longueur de diffusion thermique LDT correspond sensiblement à la taille du point chaud 21, avec

$$LDT = \sqrt{(DT / \pi \cdot f)}.$$

Où DT est la diffusivité thermique.

Grâce à la modulation du signal F1, le signal F2 issu du point chaud est lui aussi modulé à la même fréquence de modulation Fmod ou à une de ses harmoniques. En l'espèce, la modulation du signal F1 peut être produite à l'aide d'un modulateur acousto-optique.

On prévoit alors une détection synchrone du rayonnement thermique d'un point chaud, c'est-à-dire que l'on prévoit de capturer le signal infrarouge F2 par le détecteur infrarouge 50 à la fréquence de modulation Fmod ou à une de ses harmoniques. En effet, il existe dans ce cas un lien entre l'extension spatiale du point chaud dû à la diffusion thermique et la fréquence de modulation.

En sortie détecteur infrarouge 50, le signal S1 peut alors être démodulé, typiquement grâce à un démodulateur non illustré. Le démodulateur peut être intégré au module de traitement 60. En l'espèce, le démodulateur comprend un amplificateur à détection synchrone *(Lock in* en langue anglaise).

Ainsi selon l'un ou l'autre des modes de réalisation précédents, la détection du signal F2 peut être effectuée soit en régime temporel, soit en régime fréquentiel.

## Balayage

On peut prévoir d'effectuer un balayage de l'échantillon point par point, selon un nombre de points chauds prédéterminés, et de mesurer l'intensité du signal F2 à chaque point.

Le balayage est mis en oeuvre en modifiant la position relative du point de focalisation du faisceau F1 et soit de l'échantillon soit de son support. Par exemple on peut modifier la position du point de focalisation du faisceau F1, la position de l'échantillon (ou de son support) restant fixe ; ou modifier la position de l'échantillon (ou de son support), la position du point de focalisation du faisceau F1 restant fixe.

On peut ainsi obtenir une image du rayonnement thermique infrarouge de l'échantillon point par point avec une résolution déterminée par le fenêtrage temporel.

Le signal F2 peut également être transmis en entrée d'un spectromètre infrarouge 52, par exemple un spectromètre infrarouge à transformée de Fourier.

L'imagerie infrarouge et la spectrométrie infrarouge sont combinables.

Par exemple on peut prévoir dans un premier temps de réaliser une image infrarouge d'un échantillon par balayage, puis de sélectionner dans ladite image infrarouge un ensemble d'au moins un point chaud, dont la position est connue, et qui présente un intérêt. Grâce à cette analyse de l'image infrarouge, on peut alors réaliser une analyse spectroscopique dudit échantillon pour au moins un point chaud sélectionné.

On peut aussi avantageusement réaliser simultanément une image infrarouge point par point d'un échantillon par balayage, et une analyse spectroscopique infrarouge de chaque point chaud, ce qui permet d'obtenir une analyse infrarouge très riche dudit échantillon puisque pour chaque point chaud, on obtient à la fois l'image thermique dudit point chaud et, dans une autre dimension, la dépendance énergétique (en longueur d'onde) du signal F2 détecté pour ledit point chaud.

La présente solution peut présenter deux configurations, décrites ci-dessous. Quelle que soit la première ou la deuxième configuration, on peut prévoir l'une des 3 variantes suivantes.

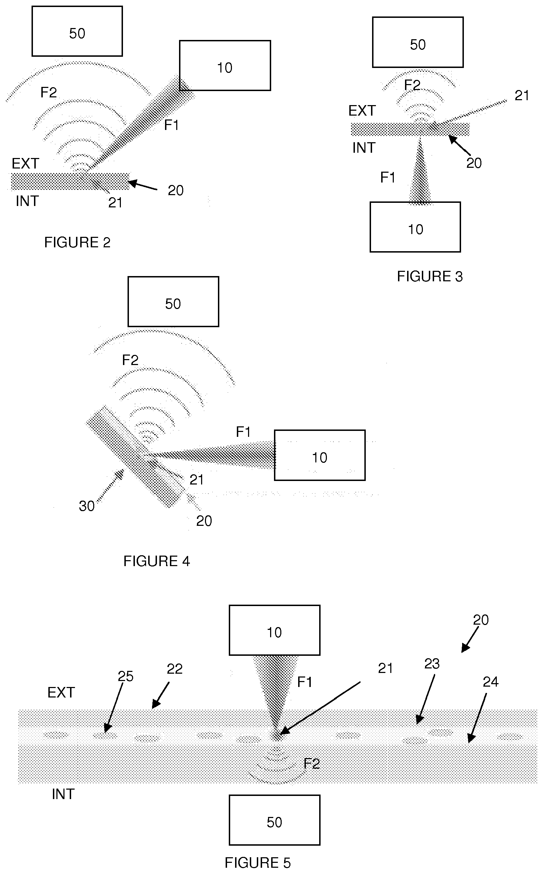

Selon une première variante, illustrée figure 2, le point de focalisation du faisceau F1 est disposé sur la surface externe de l'échantillon. Ce type de configuration est proche du principe des sondes SNOMs à la différence que la solution proposée ici est sans contact avec l'échantillon.

Selon une deuxième variante, illustrée figure 3 et figure 5, le point de focalisation du faisceau F1 est disposé à l'intérieur de l'échantillon.

Selon une troisième variante, illustrée figure 4, le point de focalisation du faisceau F1 est disposé sur la surface interne de l'échantillon.

**Dans une première configuration,** dite en réflexion, illustrée sur la figure 2 et sur la figure 4, on prévoit que la source lumineuse 10 et le détecteur infrarouge 50 sont disposés du même côté de l'échantillon, en l'espèce du côté externe EXT de l'échantillon 20, le côté interne INT étant par exemple en contact avec un support.

Sur la figure 2, l'échantillon 20 présente une absorption à la longueur d'onde L_F1 du faisceau incident F1. L'échantillon 20 est la source du rayonnement infrarouge F2.

Sur la figure 4, l'échantillon 20 est transparent à la longueur d'onde L_F1 du faisceau incident F1 ; et le support 30 (ou substrat) présente une absorption à la longueur d'onde L_F1 du faisceau incident F1. Dans ce cas, le support 30 est la source du rayonnement infrarouge F2 et ce rayonnement est partiellement absorbé par l'échantillon 20. De préférence, l'échantillon est posé sur le support 30, de sorte à ce qu'ils soient au contact l'un de l'autre. L'échantillon 20 présente une absorption à la longueur d'onde thermique infrarouge produite par le support 30, qui est détectée par le détecteur infrarouge 50. On peut prévoir de détecter directement le spectre infrarouge émis par le support 30 et partiellement absorbé par l'échantillon 20. On peut aussi prévoir d'effectuer une détection différentielle entre la détection faite par le détecteur infrarouge 50 en présence de l'échantillon et la détection faite par le détecteur infrarouge 50 en absence dudit échantillon.

**Dans une deuxième configuration,** dite en transmission, illustrée sur la figure 3 et sur la figure 5, on prévoit que la source lumineuse 10 et le détecteur infrarouge 50 sont disposés de part et d'autre de l'échantillon.

Dans ce cas, l'interface entre l'échantillon et la source lumineuse est transparente à la longueur d'onde d'excitation L_F1 du faisceau incident, et l'interface entre l'échantillon et le détecteur infrarouge 50 est transparente à la longueur d'onde L_F2 du rayonnement thermique. Ce type de configuration peut être avantageux lorsque l'échantillon doit être recouvert par une couche. En effet, dans une configuration en réflexion, le matériau de la couche 22 utilisée pour recouvrir l'échantillon doit être transparent à la fois à longueur d'onde d'excitation L_F1 et transparent à la longueur d'onde L_F2 du rayonnement thermique. Au contraire en configuration en transmission, on peut disposer deux interfaces différentes, chaque interface étant transparente à une longueur d'onde respective.

Cette configuration permet avantageusement de réaliser une image sub-surfacique d'un échantillon, ce que ne permettent pas les sondes SNOM.

Sur la figure 5, on a représenté un échantillon 20 sous forme de cellule microfluidique comprenant une couche 22 externe, transparente à la longueur d'onde d'excitation L_F1, un canal microfluidique 23 comprenant par exemple des cellules biologiques 25, et une couche interne 24, transparente à la longueur d'onde L_F2 du rayonnement thermique.

En l'espèce, le faisceau F1 est focalisé sur une cellule 25 dans le canal microfluidique. La cellule micro fluidique est illuminée d'un coté (côté externe EXT) en visible ou UV pour créer le point chaud 21, et placée sur un substrat 24 transparent dans l'IR du côté opposé (côté interne INT) à travers lequel on détecte le rayonnement thermique F2 émis.

Le choix de l'une ou l'autre des configurations dépend par exemple de la nature de l'échantillon, notamment de son absorption aux deux longueurs d'onde L_F1 et L_F2.

## Résultats expérimentaux

Des essais ont été réalisés par la demanderesse et sont illustrés sur les figures 6 à 8.

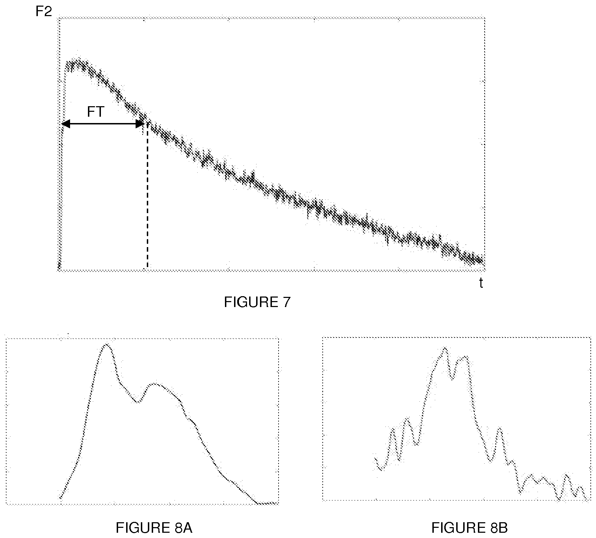

La figure 7 illustre une courbe de déclin de l'intensité du signal infrarouge F2 en fonction du temps t, après une impulsion de chaleur sur un échantillon, en l'espèce de fibre de verre, à t=0. Sous l'effet de l'impulsion, la température locale de l'échantillon augmente très rapidement jusqu'à un maximum, puis décline selon une courbe de décroissance qui dépend de la diffusion de la chaleur dans l'échantillon, liée à sa nature et à sa géométrie. Il est donc préférable de prévoir un fenêtrage temporel FT qui débute à partir de l'impulsion de la source lumineuse 10, ce qui garantit de détecter le pic d'intensité du signal F2.

De préférence, on prévoit de limiter la durée du fenêtrage temporel pendant une durée prédéterminée, par exemple au plus tard à la valeur pour laquelle la longueur de diffusion thermique est de la taille du point de focalisation du faisceau incident F1, ce qui permet de limiter les phénomènes de diffusion thermique dans l'échantillon, donc de limiter l'extension de la source du rayonnement thermique, de conserver une extension de la source du rayonnement thermique inférieure à la longueur d'onde thermique L_F2, et d'avoir un meilleur rapport signal / bruit.

Grâce à ces caractéristiques, on peut obtenir avec un imageur infrarouge des images dites super-résolues, comme illustré sur la figure 6.

La figure 6 compare une image de microscopie infrarouge conventionnelle et en insert (dans l'encadré en partie supérieure de la figure 6) une image infrarouge super-résolue d'une fibre de verre. En l'espèce, la fenêtre temporelle est de 50 $\mu$s après l'impulsion de chauffage et la fibre de verre est de 13 microns d'épaisseur. Chaque point de l'image de l'insert de la figure 6 est une valeur d'intensité du signal infrarouge F2 moyenné sur la fenêtre temporelle FT en fonction de la position.

La figure 8A et la figure 8B illustrent les spectres infrarouges obtenus respectivement sur un échantillon de verre et un échantillon de polydiméthylsiloxane (PDMS), obtenus grâce à un spectromètre selon l'invention.

La présente invention permet la caractérisation sans contact des propriétés optiques infrarouges à une échelle inférieure à la longueur d'onde thermique L_F2.

Comme évoqué précédemment, la source lumineuse 10 est combinée à l'un au moins parmi un dispositif électronique de synchronisation 70 et le module de traitement 60, ce qui permet d'agir sur le signal S1 en sortie du détecteur infrarouge utilisé. Cela permet de limiter la diffusion de la tache de chaleur autour du point chaud de l'échantillon qui contribue au signal F2. On détecte ainsi le rayonnement thermique infrarouge de l'échantillon en provenance d'une zone de taille inférieure à la longueur d'onde L_F2 caractéristique de ce rayonnement. Cette zone peut être balayée à la surface de l'échantillon pour effectuer des mesures d'imagerie et de spectroscopie infrarouges super-résolues.

La synchronisation peut être effectuée en temps réel ou en post-traitement, dans ce cas grâce au module de traitement 60, ce qui permet de laisser le détecteur infrarouge 50 activé indépendamment de l'activation de la source lumineuse 10.

Par ailleurs, on peut aussi prévoir de déposer sur la surface de l'échantillon des nanoparticules qui jouent le rôle de diffuseurs locaux du rayonnement thermique de champ proche.

Comme vu précédemment, l'échantillon doit absorber dans une région du spectre où la longueur d'onde L_F1 est plus petite que celle du rayonnement thermique L_F2 détecté, de manière à pouvoir créer un point chaud 21 de taille sub-longueur d'onde. A défaut, on peut placer l'échantillon sur un substrat et former le point chaud à l'interface entre ce substrat et l'échantillon. Par exemple, en déposant l'échantillon sur une simple lamelle de verre, on peut créer le point chaud à l'interface avec un laser UV car celui-ci est fortement absorbé par le verre.

La présente invention peut être mise en oeuvre en thermographie infrarouge, en particulier pour les études sans contact du transport thermique en régime dynamique suite à une impulsion brève (ou modulée) et ponctuelle de chaleur qui peut être balayée à la surface de l'échantillon. En balayant le détecteur infrarouge par rapport au point chaud, il est aussi possible d'imager l'étalement de la chaleur en divers instants après l'impulsion de chaleur, et d'obtenir ainsi, par exemple, une cartographie de différences locales de conductivités thermiques.

Les anomalies dans le transport thermique permettent de détecter de manière non destructive des défauts d'une structure, ce qui peut être utile pour des échantillons tels que les tissus biologiques, les polymères, matériaux composites, etc.

Nomenclature

F1    Faisceau incident, de longueur d'onde d'excitation L_F1

F2    Emission thermique d'un point chaud, de longueur d'onde L_F2

S1    Signal de sortie du détecteur infrarouge

10    Source lumineuse

11    Dispositif de focalisation optique du faisceau incident

20    Echantillon

21    Point chaud

22    couche transparente à la longueur d'onde d'excitation L_F1

23    canal microfluidique

24    interface transparente à la longueur d'onde L_F2

25    cellule biologique

30    Support d'échantillon

40    Dispositif optique de collecte du rayonnement thermique d'un échantillon (objectif optique)

50    Détecteur infrarouge

51    Imageur infrarouge

52    Spectromètre infrarouge

60    Module de traitement

70    Dispositif de synchronisation

## Revendications

1. Dispositif de détection infrarouge, comprenant :

   - un détecteur infrarouge (50) configuré pour émettre un signal (S1) représentatif du rayonnement thermique de longueur d'onde (L_F2) émis par un ensemble d'au moins un point chaud (21),
   - une source lumineuse (10) configurée pour émettre un faisceau incident (F1) de longueur d'onde (L_F1) inférieure à la longueur d'onde (L_F2), de préférence dans une fenêtre de longueur d'onde visible ou UV,

- un dispositif de focalisation (11) dudit faisceau incident (F1), la focalisation dudit faisceau incident (F1) produisant un ensemble d'au moins une tache de focalisation, chaque tache de focalisation ayant une taille inférieure à celle de la longueur d'onde (L_F2) du rayonnement thermique infrarouge détecté, chaque tache de focalisation étant susceptible de générer un point chaud (21) respectif lorsque ladite tache de focalisation est située sur un support ou un échantillon, et dont la vitesse d'étalement sur ledit support ou ledit échantillon est connue,

- un module de traitement (60), connecté au moins au détecteur infrarouge (50),

- un dispositif de synchronisation (70) connecté à l'un au moins parmi : ladite source lumineuse (10), ledit détecteur infrarouge (50) et ledit module de traitement (60),

- le dispositif de synchronisation (70) étant configuré pour émettre un signal de synchronisation (SYNC), et

- le détecteur infrarouge (50) ou le module de traitement étant configurés pour mesurer le signal (S1) sur une fenêtre de temps (FT) prédéterminée en fonction dudit signal de synchronisation (SYNC) et de la vitesse d'étalement du point chaud,

**caractérisé en ce que** :

- le module de traitement (60) est configuré pour mesurer le signal (S1) sur une fenêtre de temps (FT) dont la valeur de celle-ci multipliée par la valeur de la vitesse d'étalement du point chaud (21) est inférieure à la valeur de la longueur d'onde infrarouge (L_F2) du rayonnement thermique émis par ledit point chaud (21).

2. Dispositif selon la revendication 1, dans lequel :

- la source lumineuse (10) est une source impulsionnelle, configurée pour émettre un train d'au moins une impulsion lorsqu'elle est activée, et

- le signal de synchronisation (SYNC) est émis en fonction dudit train d'au moins une impulsion.

3. Dispositif selon la revendication 1, dans lequel :

- la source lumineuse (10) est une source lumineuse continue ou impulsionnelle, modulée temporellement à une fréquence de modulation (Fmod),

- le dispositif de détection infrarouge comprenant en outre un démodulateur configuré pour démoduler le signal (S1) issu du détecteur infrarouge (50) à la fréquence de modulation (Fmod) ou à une de ses harmoniques.

4. Dispositif selon l'une quelconque des revendications précédentes, dans lequel le détecteur infrarouge (50) comprend l'un au moins parmi :

- un détecteur infrarouge monocanal ou un imageur infrarouge (51), et
- un spectromètre infrarouge (52).

5. Dispositif selon l'une quelconque des revendications précédentes, comprenant en outre un support (30) d'échantillon, le dispositif pouvant adopter l'une ou l'autre des configurations parmi :

- une configuration en réflexion dans laquelle la source lumineuse (10) et le détecteur infrarouge (50) sont disposés d'un même côté du support (30), et
- une configuration en transmission dans laquelle la source lumineuse (10) et le détecteur infrarouge (50) sont disposés de part et d'autre du support (30).

6. Dispositif selon la revendication 5, comprenant en outre :

- un dispositif de balayage, configuré pour modifier la position relative du point de focalisation du faisceau (F1) et du support (30).

7. Dispositif selon l'une quelconque des revendications précédentes, comprenant en outre un échantillon (20), ledit échantillon étant optionnellement compris dans un canal microfluidique (23) d'une cellule microfluidique, ladite cellule microfluidique comprenant une couche (22) externe, transparente à la longueur d'onde d'excitation (L_F1) du faisceau incident (F1), et une couche interne (24) transparente à la longueur d'onde (L_F2) du rayonnement thermique (F2).

8. Procédé de détection infrarouge susceptible de mettre en oeuvre le dispositif selon la revendication 5, le procédé comprenant des étapes consistant à :

- positionner un échantillon (20) sur un support (30),
- activer une source lumineuse (10),
- focaliser le faisceau (F1) d'une source lumineuse (10) sur un ensemble d'au moins une zone de focalisation (21) dont la position est prédéterminée et comprise dans ledit échantillon (20), sur une surface dudit échantillon, ou à l'interface entre ledit échantillon (20) et ledit support (30), pour générer une augmentation locale du rayonnement thermique (F2) émis par ledit échantillon (20) ou ledit support (30),
- collecter ledit rayonnement thermique (F2) émis par chaque zone de focalisation (21) dudit ensemble dans un objectif optique (40) combiné à un détecteur infrarouge (50) comprenant l'un au moins parmi :

- un détecteur infrarouge monocanal ou un imageur infrarouge (51), et
- un spectromètre infrarouge (52),

- générer un signal de sortie (S1), représentatif du rayonnement thermique (F2) détecté par ledit détecteur infrarouge (50),
- synchroniser ledit détecteur infrarouge (50) et ladite source lumineuse (10), et
- activer le détecteur infrarouge (50) sur une fenêtre de temps (FT) prédéterminée, à partir d'un moment prédéterminé après l'activation de la source lumineuse (10).

9. Procédé selon la revendication 8, comprenant en outre des étapes consistant à :

- moduler temporellement ladite source lumineuse (10), continue ou impulsionnelle, à une fréquence de modulation (Fmod), et
- démoduler le signal (S1) issu du détecteur infrarouge (50) à la fréquence de modulation (Fmod) ou à une de ses harmoniques par un démodulateur du dispositif de détection infrarouge,

et dans lequel de préférence,

- si la source lumineuse (10) est une source impulsionnelle, elle est configurée pour générer un train d'impulsions comprenant un ensemble de fronts montants et fronts descendants, l'étape d'activation du détecteur infrarouge (50) consistant alors à activer le détecteur infrarouge (50) au plus tard au dernier front descendant du train d'impulsions.

**Patentansprüche**

1. Infrarotdetektionsvorrichtung, die Folgendes umfasst:

- einen Infrarotdetektor (50), konfiguriert zum Emittieren eines Signals (S1), das die Wärmestrahlung mit einer Wellenlänge (L_F2) darstellt, die von einem Satz von mindestens einem Hotspot (21) emittiert wird,
- eine Lichtquelle (10), konfiguriert zum Emittieren eines einfallenden Strahls (F1) mit einer Wellenlänge (L_F1), die kleiner ist als die Wellenlänge (L_F2), vorzugsweise in einem Fenster von sichtbaren oder UV-Wellenlängen,
- eine Vorrichtung (11) zum Fokussieren des einfallenden Strahls (F1), wobei die Fokussierung des einfallenden Strahls (F1) einen Satz von mindestens einem Fokussierungsfleck erzeugt, wobei jeder Fokussierungsfleck eine Größe hat, die kleiner ist als die der Wellenlänge (L_F2) der detektierten Infrarot-Wärmestrahlung, wobei jeder Fokussierungsfleck einen jeweiligen Hotspot (21) erzeugen kann, wenn sich der Fokussierungsfleck auf einem Träger oder einer Probe befindet, und seine Ausbreitungsgeschwindigkeit auf dem Träger oder der Probe bekannt ist,
- ein Verarbeitungsmodul (60), das mindestens mit dem Infrarotdetektor (50) verbunden ist,
- eine Synchronisationsvorrichtung (70), die mit mindestens einem von der Lichtquelle (10), dem Infrarotdetektor (50) und dem Verarbeitungsmodul (60) verbunden ist;
- wobei die Synchronisationsvorrichtung (70) zum Emittieren eines Synchronisationssignals (SYNC) konfiguriert ist, und
- wobei der Infrarotdetektor (50) oder das Verarbeitungsmodul zum Messen des Signals (S1) über ein Zeitfenster (FT) konfiguriert sind, das in Abhängigkeit von dem Synchronisationssignal (SYNC) und der Ausbreitungsgeschwindigkeit des Hotspots vorbestimmt ist,

**dadurch gekennzeichnet, dass**:

- das Verarbeitungsmodul (60) zum Messen des Signals (S1) über ein Zeitfenster (FT) konfiguriert ist, dessen Wert multipliziert mit dem Wert der Ausbreitungsgeschwindigkeit des Hotspots (21) kleiner ist als der Wert der Infrarotwellenlänge (L_F2) der von dem Hotspot (21) emittierten Wärmestrahlung.

2. Vorrichtung nach Anspruch 1, wobei:

- die Lichtquelle (10) eine Impulsquelle ist, konfiguriert zum Emittieren einer Folge von mindestens einem Impuls, wenn sie aktiviert wird, und
- das Synchronisationssignal (SYNC) in Abhängigkeit von der Folge von mindestens einem Impuls emittiert wird.

3. Vorrichtung nach Anspruch 1, wobei:

- die Lichtquelle (10) eine kontinuierliche oder gepulste Lichtquelle ist, die zeitlich mit einer Modulationsfrequenz (Fmod) moduliert ist,
- die Infrarotdetektionsvorrichtung ferner einen Demodulator umfasst, der zum Demodulieren des Signals (S1) aus dem Infrarotdetektor (50) mit der Modulationsfrequenz (Fmod) oder einer ihrer Harmonischen konfiguriert ist.

4. Vorrichtung nach einem der vorhergehenden Ansprüche, wobei der Infrarotdetektor (50) mindestens eines umfasst von:

- einem Einkanal-Infrarotdetektor oder einem Infrarot-Imager (51), und
- einem Infrarot-Spektrometer (52).

**5.** Vorrichtung nach einem der vorhergehenden Ansprüche, die ferner einen Probenträger (30) umfasst, wobei die Vorrichtung eine der folgenden Konfigurationen annehmen kann:

- eine Reflexionskonfiguration, bei der die Lichtquelle (10) und der Infrarotdetektor (50) auf derselben Seite des Trägers (30) angeordnet sind, und
- eine Transmissionskonfiguration, bei der die Lichtquelle (10) und der Infrarotdetektor (50) auf beiden Seiten des Trägers (30) angeordnet sind.

**6.** Vorrichtung nach Anspruch 5, die ferner Folgendes umfasst:

- eine Abtastvorrichtung, die zum Ändern der relativen Position des Fokussierungspunkts des Strahls (F1) und des Trägers (30) konfiguriert ist.

**7.** Vorrichtung nach einem der vorhergehenden Ansprüche, die ferner eine Probe (20) umfasst, wobei die Probe optional in einem mikrofluidischen Kanal (23) einer mikrofluidischen Zelle umfasst ist, wobei die mikrofluidische Zelle eine äußere Schicht (22), die für die Anregungswellenlänge (L_F1) des einfallenden Strahls (F1) transparent ist, und eine innere Schicht (24) umfasst, die für die Wellenlänge (L_F2) der Wärmestrahlung (F2) transparent ist.

**8.** Infrarotdetektionsverfahren, bei dem die Vorrichtung nach Anspruch 5 eingesetzt werden kann, wobei das Verfahren die folgenden Schritte umfasst:

- Positionieren einer Probe (20) auf einem Träger (30),
- Aktivieren einer Lichtquelle (10),
- Fokussieren des Strahls (F1) einer Lichtquelle (10) auf einen Satz von mindestens einer Fokussierungszone (21), deren Position vorbestimmt und in der Probe (20) umfasst ist, auf einer Oberfläche der Probe oder an der Grenzfläche zwischen der Probe (20) und dem Träger (30), um eine lokale Zunahme der von der Probe (20) oder dem Träger (30) emittierten Wärmestrahlung (F2) zu erzeugen,
- Sammeln der von jeder Fokussierungszone (21) des Satzes emittierten Wärmestrahlung (F2) in einem optischen Objektiv (40), kombiniert mit einem Infrarotdetektor (50), der mindestens eines umfasst von:

- einem Einkanal-Infrarotdetektor oder einem Infrarot-Imager (51), und
- einem Infrarot-Spektrometer (52),

- Erzeugen eines Ausgangssignals (S1), das die vom Infrarotdetektor (50) detektierte Wärmestrahlung (F2) darstellt,
- Synchronisieren des Infrarotdetektors (50) und der Lichtquelle (10), und
- Aktivieren des Infrarotdetektors (50) über ein vorbestimmtes Zeitfenster (FT), beginnend zu einem vorbestimmten Zeitpunkt nach der Aktivierung der Lichtquelle (10).

**9.** Verfahren nach Anspruch 8, das ferner die folgenden Schritte umfasst:

- zeitliches Modulieren der kontinuierlichen oder gepulsten Lichtquelle (10), mit einer Modulationsfrequenz (Fmod), und
- Demodulieren des Signals (S1) aus dem Infrarotdetektor (50) mit der Modulationsfrequenz (Fmod) oder einer ihrer Harmonischen durch einen Demodulator der Infrarotdetektionsvorrichtung, und wobei vorzugsweise
- die Lichtquelle (10), wenn sie eine Impulsquelle ist, zum Erzeugen einer Impulsfolge konfiguriert ist, die einen Satz von ansteigenden Flanken und abfallenden Flanken umfasst, wobei der Schritt des Aktivierens des Infrarotdetektors (50) dann darin besteht, den Infrarotdetektor (50) spätestens bei der letzten abfallenden Flanke der Impulsfolge zu aktivieren.

**Claims**

**1.** An infrared-detecting device, comprising:

- an infrared detector (50) configured to emit a signal (S1) representative of the thermal radiation of wavelength (L_F2) emitted by a set of at least one hotspot (21),
- a light source (10) configured to emit an incident beam (F1) of wavelength (L_F1) shorter than the wavelength (L_F2), preferably in a window of UV or visible wavelength,
- a device for focusing (11) said incident beam (F1), the focusing of said incident beam (F1) producing a set of at least one focal spot, each focal spot having a size smaller than that of the wavelength (L_F2) of the detected infrared thermal radiation, each focal spot being capable of generating a respective hotspot (21) when said focal spot is located on a holder or a sample, and the spreading rate of which over said holder or said sample is known,

- a processing module (60), connected to at least the infrared detector (50),
- a synchronising device (70) connected to at least one of: said light source (10), said infrared detector (50) and said processing module (60),
- the synchronising device (70) being configured to emit a synchronisation signal (SYNC), and
- the infrared detector (50) or the processing module being configured to measure the signal (S1) in a time window (FT) that is preset depending on said synchronisation signal (SYNC) and the spreading rate of the hotspot,

**characterised in that**:

- the processing module (60) is configured to measure the signal (S1) in a time window (FT) the value of which multiplied by the value of the spreading rate of the hotspot (21) is lower than the value of the infrared wavelength (L_F2) of the thermal radiation emitted by said hotspot (21).

2. The device according to claim 1, wherein:

- the light source (10) is a pulsed source configured to emit a train of at least one pulse when it is activated, and
- the synchronisation signal (SYNC) is emitted depending on said train of at least one pulse.

3. The device according to claim 1, wherein:

- the light source (10) is a continuous-wave or pulsed light source that is time modulated at a modulation frequency (Fmod),
- the infrared-detecting device further comprising a demodulator configured to demodulate the signal (S1) output from the infrared detector (50) at the modulation frequency (Fmod) or one of its harmonics.

4. The device according to any one of the preceding claims, wherein the infrared detector (50) comprises at least one of:

- a single-channel infrared detector or an infrared imager (51), and
- an infrared spectrometer (52).

5. The device according to any one of the preceding claims, further comprising a sample holder (30), the device being able to adopt either one of the following configurations:

- a reflection configuration in which the light source (10) and the infrared detector (50) are placed on the same side of the holder (30), and

- a transmission configuration in which the light source (10) and the infrared detector (50) are placed on either side of the holder (30).

6. The device according to claim 5, further comprising:

- a scanning device configured to modify the relative position of the focal point of the beam (F1) and of the holder (30).

7. The device according to any one of the preceding claims, further comprising a sample (20), said sample optionally being comprised in a microfluidic channel (23) of a microfluidic cell, said microfluidic cell comprising an external layer (22) that is transparent for the excitation wavelength (L_F1) of the incident beam (F1), and an internal layer (24) that is transparent for the wavelength (L_F2) of the thermal radiation (F2).

8. An infrared-detecting method capable of employing the device according to claim 5, the method comprising steps of:

- positioning a sample (20) on a holder (30),
- activating a light source (10),
- focusing the beam (F1) of a light source (10) on a set of at least one focal zone (21) the position of which is preset and comprised in said sample (20), on a surface of said sample, or at the interface between said sample (20) and said holder (30), in order to generate a local increase in the thermal radiation (F2) emitted by said sample (20) or said holder (30),
- collecting said thermal radiation (F2) emitted by each focal zone (21) of said set in an optical objective (40) that is combined with an infrared detector (50) comprising at least one of:

  - a single-channel infrared detector or an infrared imager (51), and
  - an infrared spectrometer (52),

- generating an output signal (S1) representative of the thermal radiation (F2) detected by said infrared detector (50),
- synchronising said infrared detector (50) and said light source (10), and
- activating the infrared detector (50) in a preset time window (FT), starting at a preset time after the activation of the light source (10).

9. The method according to claim 8, further comprising steps of:

- time modulating said continuous-wave or pulsed light source (10) at a modulation frequency (Fmod), and

- demodulating the signal (S1) output from the infrared detector (50) at the modulation frequency (Fmod) or one of its harmonics with a demodulator of the infrared-detecting device, and wherein preferably,
- if the light source (10) is a pulsed source, it is configured to generate a pulse train comprising a set of rising edges and falling edges, the step of activating the infrared detector (50) then consisting in activating the infrared detector (50) at the latest on the last falling edge of the pulse train.

FIGURE 1

FIGURE 6

FIGURE 2

FIGURE 3

FIGURE 4

FIGURE 5

FIGURE 7

FIGURE 8A

FIGURE 8B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4947034 A
- US 20050259252 A
- US 7977636 B
- WO 2008143817 A
- US 8873140 B
- US 5093580 A

**Littérature non-brevet citée dans la description**

- **PETER R. GRIFFITHS ; JAMES A. DE HASETH.** Fourier Transform Infrared Spectrometry. John Wiley and Sons, 2007
- **F HUTH ; M SCHNELL ; J WITTBORN ; N OCELIC ; R HILLENBRAND.** Infrared-spectroscopic nanoimaging with a thermal source. *NATURE MATERIALS,* 2011, vol. 10, 352
- **AC JONES ; MB RASCHKE.** Thermal Infrared Near-Field Spectroscopy. *NANO LETTERS,* 2012, vol. 12, 1475-1481
- **A DAZZI ; CB PRATER ; Q HU ; DB CHASE et al.** AFM-IR: Combining Atomic Force Microscopy and Infrared Spectroscopy for Nanoscale Chemical Characterization. *APPLIED SPECTROSCOPY,* 2012, vol. 66, 1365-1384